# EUROPEAN PATENT SPECIFICATION

(11) **EP 4 158 186 B1**
(45) Date of publication and mention of the grant of the patent: **07.01.2026**
(21) Application number: 21729516.1
(22) Date of filing: 28.05.2021
(51) Int. Cl.: F03D 5/00, B63H 8/10, B64C 31/06, F03D 5/06

(54) **POWER KITE AND BRIDLE SYSTEM**
KRAFTDRACHEN- UND ZAUMZEUGSYSTEM
CERF-VOLANT DE TRACTION ET SYSTÈME DE BRIDE

(30) Priority: 29.05.2020 NL 2025700
(43) Date of publication of application: 05.04.2023
(73) Proprietor: Enevate B.V., 2627 AN Delft (NL)
(72) Inventor: PESCHEL, Johannes Otto, 2627 AN Delft (NL); BREUER, Johannes Catherina Marie, 2627 AN Delft (NL); VAN OSTHEIM, Bryan Lee, 2627 AN Delft (NL); FAGGIANI, Pietro, 2627 AN Delft (NL)
(74) Representative: Arnold & Siedsma
(86) International application number: PCT/EP2021/064401
(87) International publication number: WO 2021/239975

(56) References cited:
- EP-A1- 2 562 084
- US-A1- 2002 040 948
- US-A1- 2002 187 717
- US-A1- 2007 250 226
- US-A1- 2009 072 092

## Description

The invention relates to a power kite and a bridle system as well as a method for controlling a power kite and a bridle system. Furthermore, the invention relates to a wind engaging member for an airborne wind energy system. The invention also relates to a wind energy harvesting system.

A power kite is a kite designed to provide significant pull to a user. Power kites are often used, and are best known from kitesurfing, kite buggying, kite landboarding, kiteboating, snowkiting and other sport activities. US2002187717A1 describes an example of a kite for kitesurfing. A power kite is a kite of which a flight track can be controlled by steering the kite. The kite has a leading edge, which is the edge that leads the movement when the kite is flying its flight track. There are multiple types of power kite. The two most common types are the foil power kites, and the leading edge inflatable power kites. There are also other less common types of power kites including rigid-framed power kites and soft single skin power kites.

Foil kites have a double skin with a number of cells in between. It is the profile of these cells that gives the kite its shape in the air and enables it to generate lift. Each cells may be provided with an opening at the front, meaning air is forced in the cells during flight, giving the kite its stiffness and enabling it to hold its profile. Alternatively, cells may be closed, where a one-way valve locks the air inside the cells, giving some increased water relaunch capability.

Leading edge inflatable power kites have a single skin with a reinforcing structure formed by an inflated tubular leading edge and optionally one or more inflated struts. The leading edge and optionally the struts are inflated by the user with a pump prior to launching the kite. By inflating the leading edge and optionally the struts, the power kite is given its shape.

Power kites have, or are connected to, a bridle system for controlling the steering angle and for depowering the kite. The bridle system may additionally distribute forces acting on the power kite over its surface. A traditional bridle system used in kite surfing is explained to clarify how the bridle system is manipulated to control the steering angle and the angle of attack of the power kite. A traditional bridle system has two power lines and two steering lines. The power lines centrally connect the front end of the kite to a harness of the kiter and transfers the majority of the pull of the kite to the harness. The distance between the kiter and the power line connection points at the power kite is fixed and predetermined by the length of the power lines. The steering lines connect the wingtips of the kite to a control bar. By tilting the control bar, the steering lines are pulled and released in a balanced manner, allowing to manipulate the steering angle of the kite. By pulling both steering lines to, and pushing both steering lines away from the harness, the angle of attack of the kite is manipulated. As a result of the shape of the kite, typically C-shape or bow-shape, wingtips are located behind the front end of the kite. By pulling both steering lines to, and pushing both steering lines away from the harness, the distance between the kiter and the steering line connection points at the power kite is adapted and changed compared to the power line distance, such that the kite is tilted. Using a traditional bridle system with a traditional power kite, both the steering angle and the angle of attack of the power kite is manipulated via the steering lines.

Power kites and bridle systems are also used in wind energy harvesting systems. In these systems, the general concept of the power kite remains similar to kitesurfing power kites. However the power kites in wind energy harvesting systems may be significantly larger compared to kitesurfing power kites. The forces transmitted over the lines may be significantly higher. EP2562084 describes an asymmetric kite for a system for extracting energy from the wind. US2007250226 describes a watercraft comprising a free-flying kite-type wind-attacked element as a wind-powered drive unit.

It is an object of the invention to improve the kite control of a power kite and bridle system.

To this end, the invention provides a power kite and a bridle system according to claim 1, adapted to connect the power kite to a control box, the power kite having a leading edge and a trailing edge, the bridle system comprising multiple power lines and at least two steering lines, the steering lines being connected to zones including wingtips of the power kite such that a steering angle of the power kite is controllable by balancing the steering lines, wherein the multiple power lines comprise a back line connected to a back zone of the power kite including a central part of the trailing edge, such that an angle of attack of the power kite is controllable by pulling and releasing the back line.

The invention is based on the insight that controlling both the steering angle and the angle of attack of the power kite via the steering lines is suboptimal. Multiple tests have been conducted with different steering line connection points at the power kite. To enable precise steering control, the steering lines are preferably connected as far as possible from the center of the kite, being at the wingtips. When steering lines are balanced to control the steering angle of the kite, a torsion is applied to the kite shape. This torsion is most effective, from a kite control perspective, when it is applied to the kite as far as possible from the center of the kite.

By simultaneously releasing or pulling the steering lines, a changed balance between the power lines and the steering lines changes the angle of attack. This angle of attack is most effective, from a kite control perspective, in the center of the kite. Since the power lines are typically connected to a center front end of the power kite, to enable precise angle of attack control, the steering lines are preferably connected closer to the center of the kite, being at a distance from the wingtips.

The above observations lead to a suboptimal control and a choice to be made. When steering lines are connected closer to the center of the kite, the control and effectiveness of the angle of attack is more optimal, but the steering becomes less accurate. When steering lines are connected closer to the wingtips of the kite, the control of the steering is more optimal, but the angle of attack becomes less effective.

The invention solves these issues by providing a back line as part of the power lines. By pulling and releasing the back line, the angle of attack of the power kite is controllable directly in the center of the kite. This allows a precise control of the angle of attack. Furthermore, changing the angle of attack directly at the center of the kite is highly effective. Also, steering lines may be connected as far as possible from the center, at the wingtips of the kite, to enable precise steering angle control. Summarizing, the angle of attack is controllable in an optimal and highly effective manner while also the steering angle is precisely controllable. In this context it is noted that particularly in gusty winds, it is advantageous to be able to control the angle of attack in a fast and precise manner in order to keep the overall pull of the power kite as constant as possible. This has an effect on the efficiency of the energy harvesting such that the overall efficiency of the wind energy harvesting system increases.

According to the invention, the multiple power lines comprise a front line connected to a front zone of the power kite including a central part of the leading edge, such that an angle of attack of the power kite is controllable by balancing the front and back lines.

This leads to an additional advantage, particularly in the context of wind energy systems. In wind energy systems, the steering angle and the angle of attack are controlled by motors. Traditionally, the forces acting on the two steering lines are balanced with respect to each other meaning that when a single steering motor is used to balance the steering lines, the steering motor should deliver power only to induce or correct a 'change' in the balance. The steering motor does not need to deliver any significant power to 'keep' the balance because forces cancel each other out. Traditionally, on the other hand, the forces acting on the two steering lines together are controlled by an angle of attack motor which pulls and releases the steering lines simultaneously. This angle of attack motor in a traditional setup needs to apply a constant significantly large force to 'keep' the angle of attack in a fixed position. Unlike the steering motor, the angle of attack motor should in a traditional setup constantly deliver a significant power to 'keep' and to 'change' the angle of attack.

When the multiple power lines comprise a back line and a front line, the forces on the front line at least partially counteract on the forces on the front line. The angle of attack is controllable by releasing the front line while pulling the back line and vise versa. Because the forces on the back line and on the front line are at least partially in balance, they at least partly cancel each other out at the angle of attack motor. As a direct result, the angle of attack motor should not deliver any significant power, or at least significantly less power, to 'keep' the balance and the angle of attack. This simplifies safety mechanisms and reduces the requirements of the angle of attack motor. Also, the energy required to operate the system is reduced such that the overall profit or gain of the energy harvesting system is improved. Summarizing, the kite control of a power kite and bridle system of the invention is improved.

Preferably, the multiple power lines further comprise at least one central power line connected to a central zone of the kite, the central zone being located between the front zone and the back zone. By providing a central power line, a fulcrum is created which improves the kite control. This fulcrum is realized because balancing the front and back lines will induce a rotation of the kite around the connection point of the central power line. In other words, the front and back lines act like a lever while the central power line forms the rotation point. A further advantage is that the central power line may bear a significant portion of the power that is generated by the power kite. This significant portion of the power is relieved from the front line, back line and steering lines. This significant portion of the power may bypass a control box and may be directly transferred to a winch system in an energy harvesting system. Because the power is relieved from the front line, back line and steering lines, the forces acting on the control box may be smaller and the control box may be simpler and cheaper. In an embodiment without front lines, and wherein only a back line is provided which is pulled and released to control the angle of attack, the central power line may be located in the front zone and the central zone of the kite. Such central power line may act at least partly as conventional power lines known in power kite bridle systems. Because the invention provides a back line that can be released and pulled, however, the central power line will form a rotation point or fulcrum for the angle of attack rotation of the kite.

Preferably the kite is a single skin kite with a reinforcing structure. More preferably, the reinforcing structure comprises an inflatable leading edge and optionally at least one inflatable strut extending between the leading edge and the trailing edge. The inflatable strut may be reinforced with rigid elements such as composite rods. Single skin kites are cheaper and therefore more suitable to be used in an energy harvesting system compared to other power kites. A single skin kite is easy to produce and may be folded into compact package to store and transport. Before launching the power kite, a reinforcing structure is brought in place to give the kite its operational shape. Inflatable tubes provided in the leading edge and optionally in one or more struts have proven to be reliable, durable and easy to use. They give a single skin power kite good flying characteristics and allow a predictable control using the bridle system such that a flight track may be predetermined and realized by controlling the steering angle and angle of attack of the power kite. Additional advantages of inflatable reinforcing structures are: easy to pack, stability in asymmetric load conditions, particularly relevant during launch and landing and gusts, and more resistant to rough landings.

Preferably, the bridle system comprises a connection between the steering lines and the back line such that a pulling and releasing of the back line induces a simultaneous pulling and releasing of the steering lines. Further preferably, the connection is embodied via a pulley. As an alternative, a lever could be used instead of or in combination with a pulley. Providing a connection between the steering lines and the back line allows to pull and release the steering lines simultaneously with the back line. In such configuration, no additional control mechanisms should be provided at the steering lines to match the length of the steering lines with the set angle of attack. As described above, in a traditional bridle system, to control the angle of attack, a balance is obtained between the power lines and the steering lines by pulling and releasing the both steering lines simultaneously while keeping the power lines fixed. In the invention, the angle of attack is controlled by balancing the back line and the front line. The angle of attack controlled in this manner engages mainly in a center part of the kite, and it is advantageous to also align or control the wingtips in a similar manner. Flying efficiency and kite control is improved when the angle of attack is controlled over the complete kite including the center, via the back line and front line, as well as the wingtips, via the pulling and releasing of the steering lines. The connection between the back line and the steering lines, optionally via pulleys, ensures such combined control of the angle of attack in the center and the wingtips. This can be realized by only acting on the back line, such that any further mechanisms such as motors to pull and release the steering lines simultaneously may be omitted.

Preferably, at least one of the multiple power lines comprise multiple branches connected at different locations to the power kite for transversely dividing forces induced by the bridle system to the power kite. By providing multiple connection points at the power kite where the bridle system is connected, the average force on a single connection point may be significantly reduced. This simplifies the production and increases the durability of the power kite and bridle system. Furthermore, because forces are divided over the surface area of the power kite, the reinforcing structure of the power kite may be simplified.

The invention further relates to a wind engaging member for an airborne wind energy system, the wind engaging member comprising a control box connected to a power kite and a bridle system according to the invention. The control box is used in an airborne wind energy system to control the kite. Controlling the kite means flying the kite in a predetermined flight track and thereby aiming to maximize or optimize the power generated by the power kite. This power is further controlled by controlling the angle of attack of the kite. The angle of attack is adjusted to compensate for wind gusts. Furthermore, the angle of attack is controlled to improve or facilitate the steering maneuvers.

Preferably, the control box comprises at least one steering motor for pulling and releasing the steering lines to control the steering angle of the power kite, and comprises at least one angle of attack motor for pulling and releasing the front and back lines to control the angle of attack of the power kite. In such control box, steering angle and the angle of attack may be independently controlled. The angle of attack motor may be provided with a brake to reduce energy consumption when not being actuated.

Preferably, the control box comprises a steering shaft comprising a coil for the steering lines and which is connected to the bridle system in such a manner that rotation of the steering shaft in one direction induces a releasing of one of the steering lines and a simultaneous pulling of the other of the steering lines, such that a balancing of the steering lines is obtained, the steering shaft being driven by the steering motor. A coil is provided and one of the steering lines is winded in a clockwise direction on the coil while the other of the steering lines is winded in a counter-clockwise direction on the coil. The direct result is that rotation of the coil will simultaneously induce a releasing of one steering line and a pulling of the other steering line. In his manner, balancing of the steering lines can be easily realized. Furthermore, the average forces acting on one steering line are the same as the average forces acting on the other steering line such that the coil is, on average, free of torsion. This allows to use a more simple motor to control the steering motor. Alternative or in combination with a coil, a toothed belt, a chain, a chainlink or a lever could be used.

According to the invention, the control box comprises an angle of attack shaft comprising a coil for the front and back lines and which is connected to the bridle system in such a manner that rotation of the angle of attack shaft in one direction induces a releasing of the front line and a simultaneous pulling of the back line, such that a balancing of the front and back lines is obtained, the angle of attack shaft being driven by the angle of attack motor. A coil is provided and one of the back and front lines is winded in a clockwise direction on the coil while the other of the back and front lines is winded in a counter-clockwise direction on the coil. The direct result is that rotation of the coil will simultaneously induce a releasing of one of the back and front lines and a pulling of the other of the back and front lines. In his manner, balancing of the back and front lines can be easily realized. Furthermore, forces acting on the front line at least partially compensate forces acting on the back line such that the coil is, on average, less exposed to torsion. This allows to use a more simple motor to control the angle of attack. In this context, it is noted that the coil for the back line may have a different diameter then the coil for the front line. In this manner, the ratio between pulling and releasing of front line and back line can be chosen. The ratio may be chosen to balance the forces acting on the motor, or to balance the movement of the kite or both.

The invention further relates to a wind energy harvesting system comprising a ground station with a winch system, the system further comprising a wind engaging member of the invention. Using a winch system, the power kite may be used in a cyclic process to generate energy. This cyclic process comprises two step. A first step is to pull the winch outward using the power of the power kite. In this step, the power kite is flown in a flight track aiming to maximize or optimize the pull generated by the kite. A generator is connected to the winch to generate energy in the first step. A second step is to pull the winch inward using a motor connected to the winch. In this step, the power kite is flown to minimize the pull generated by the kite. In both steps, it is preferably to have optimal kite control, meaning to be able to precisely control the steering angle and the angle of attack. This has proven to be more optimal and precise using the power kite and bridle system of the invention.

A non-claimed example discloses a method for controlling a power kite, the power kite having a leading edge and a trailing edge, the power kite being connected via a bridle system comprising multiple power lines and at least two steering lines, the steering lines being connected to zones including wingtips of the power kite, wherein the multiple power lines comprise a front line connected to a front zone of the power kite including a central part of the leading edge and comprise a back line connected to a back zone of the power kite comprising a central part of the trailing edge, the method comprising:
- controlling a steering angle of the power kite by balancing the steering lines; and
- controlling an angle of attack of the power kite by balancing the front and back lines.

In a traditional power kite and bridle system, the angle of attack is controlled by pulling in and releasing the steering lines simultaneously. This has, as already discussed above, some drawbacks particularly when power generated by the power kite increases. The controlling of the angle of attack of the power kite by balancing the front and back lines has proven to increase the kite control. Furthermore, the effect of the controlling the angle of attack is more direct thereby increasing the preciseness of the controlling of the power kite.

Preferably, the step of controlling an angle of attack of the power kite further comprises simultaneously pulling and releasing of the steering lines while pulling and releasing the back line. By simultaneously pulling and releasing the steering lines while pulling and releasing the back line, the angle of attack is applied to the power kite over its complete width. The front line and back line apply the angle of attack directly to a center part of the power kite. The steering lines apply the angle of attack to side parts of the power kite.

The invention will now be described in more details with respect to the drawings illustrating some preferred embodiments of the invention. In the drawings:
figure 1 illustrates a wind energy harvesting system with a power kite;
figure 2 illustrates a schematic front view of a wind engaging member according to an embodiment of the invention;
figure 3 illustrates a top view of a power kite and bridle system according to an embodiment of the invention; and
figure 4 illustrates a cross section of a power kite and bridle system according to an embodiment of the invention.

In the drawings a same reference number has been allocated to a same or analogous element.

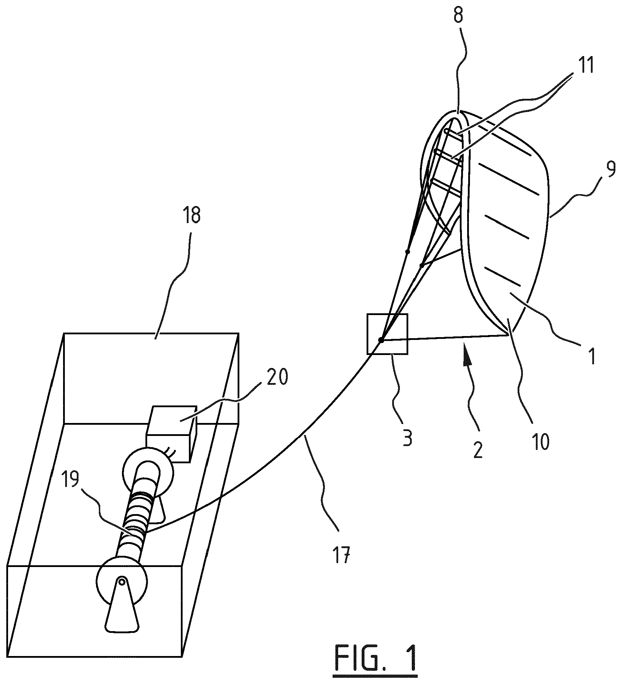

Figure 1 illustrates a wind energy harvesting system comprising a ground station 18. The ground station comprises a winch 19 connected to an electric generator 20. The winch system 19 is connected to the power kite 1 via a cable 17 and bridle system 2. Between the cable 17 and the bridle system 2, a control box 3 is placed. Alternatively, the control box 3 is connected to first lines of the bridle system while the cable is connected to other lines of the bridle system such that, technically, the control box 3 is not provided between the bridle system 2 and the cable 17. In any case, the control box is connected to the bridle system 2 to control the power kite 1 and the cable 17 is connected to the bridle system 2 to absorb power generated by the power kite 1. Controlling the power kite 1 includes adapting the steering angle as well as adapting the angle of attack of the power kite 1.

In a wind energy harvesting system, a control box is provided at a predetermined distance from the kite. This control box is primarily provided for controlling the steering angle of the kite by manipulating the steering lines. The combination of the kite and control box is typically referred to as a wind engaging member. This wind engaging member is connected to a ground station typically via a winch system. In such connection, the power lines of the kite may be directly connected to the winch system or may be connected via the control box.

As described above, using the wind energy harvesting system, electric energy may be generated. The power kite 1 may be used in a cyclic process with two step. A first step is to unroll the winch 19 using the power of the power kite 1. In this step, the power kite 1 is controlled by the control box 3 to maximize or optimize the pull generated by the power kite. Cable 17 absorbs the power generated by the power kite 1 and, as a result, is unrolled from the winch 19. This induces in a powered rotation of the winch 19 which may be at least partially countered by an electric generator 20. In other words, the power kite 1 generates a force which induces a rotational force at the winch 19. This rotational force of the winch 19 is used to generate electric power using the generator 20.

A second step is to roll the cable 17 onto the winch using a motor connected to the winch. The motor may be the generator 20, which is powered to rotate the winch. The principle of using an electric motor as motor and as generator is a known concept and therefore not further described. The motor may alternatively be separately provided in the ground station 18 for this purpose (not shown). In this second step, the power kite 1 is controlled by the control box 3 to minimize the power generated.

The power kite 1 shown in the figures is a single skin power kite with a reinforcing structure formed by an inflatable leading edge and multiple inflated struts. The inflated struts are preferably reinforced with rigid elements such as glass fiber rods. It is noted that this is a preferred embodiment and that other types of power kites may be used. A power kite is a kite of which a flight track can be controlled by steering the kite. By controlling the flight track, the speed of the power kite 1 as well as the position of the power kite 1 with respect to the wind direction may be adjusted which allows to control the power generated by the power kite 1. The power generated by the power kite 1 may be measured by measuring the force applied to the cable 17, which force may be expressed in Newton.

The power kite 1 has a leading edge 8, which is the edge that leads the movement when the kite is flying its flight track. In other words, when flying the power kite 1, the leading edge 8 is formed by the foremost edge of the power kite 1, which is the part which first meets the oncoming air. In other words, the leading edge 8 forms the front end of power kite 1. Opposite the leading edge 8, the power kite 1 comprises a trailing edge 9. The trailing edge 9 forms the back end of the power kite 1. The power kite 1, including the leading edge 8 and trailing edge 9, is preferably symmetrical with respect to a symmetry plane. The power kite 1 shows two wingtips 10 at both ends of the symmetry plane. The wingtips 10 are defined as the parts of the power kite 1 which lay most remote from the symmetry plane. Optionally, the power kite 1 is asymmetrical, which could be advantageous for example when the preferred flight track is asymmetrical. The power kite is preferably formed as a single skin kite which skin defines the dimensions of the kite. To bring this skin into its desired three-dimensional form or shape, reinforcement elements are used. The reinforcement elements preferably comprise a leading edge and one or multiple struts.

Multiple reinforcing structures, in the shown example formed as struts, are provided between the leading edge 8 and the trailing edge. In the figures, struts are indicated with reference number 11. The leading edge 8 also comprises a reinforcing structure, in the shown example an inflatable leading edge. The primary function of the reinforcing structure is to keep the power kite's shape within predetermined boundaries when the power kite 1 is in use. The reinforcing structure allows a certain flexibility or change in shape, which is preferred to cope with wind gusts as well as to allow steering of the power kite 1. The power kite 1 is typically largely symmetrical. This means that the shape of the wing forming the power kite is mirrored with respect to a central plane. It is noted that is sensors or connections or maintenance related elements are provided at the kite, these elements should not necessarily be arranged symmetrical. Particularly the shape of the kite, determining the way the wind interacts with the kite, is symmetrical. It is noted that by acting on the steering lines, the kite will, due to its flexibility, adopt an asymmetrical shape inducing a turning of the kite in the air. In neutral state of the kite, when no significant external forces are acting on the kite, the kite is symmetrical.

The reinforcement elements are preferably inflatable elements. By inflating the inflatable elements, they are made rigid. The rigidity is sufficient in the context of the kite to keep the kite in its shape while flying the kite. The rigidity is also sufficient to allow a certain deformation when manipulating the steering lines so that the kite can be steered in the air.

The bridle system 2 connects the power kite to the control box 3 and, directly or indirectly, to the cable 17. The bridle system comprises multiple lines, some of which may be branched, to divide forces resulting from flying the power kite 1 over the surface area of the power kite 1. Each line end or branch end of the bridle system is connected to the power kite at a kite connection point. Such connection may be releasable or may be fixed. Providing more kite connection points and corresponding lines or branches allows to weaken the reinforcing structure because forces are divided more densely, however it also increases the complexity as well as the drag of the power kite 1. Providing less kite connection points and corresponding lines or branches reduces costs and drag of the power kite 1, but also increases the reinforcing structure requirements. An optimum is sought by the skilled person based on the size of the power kite 1.

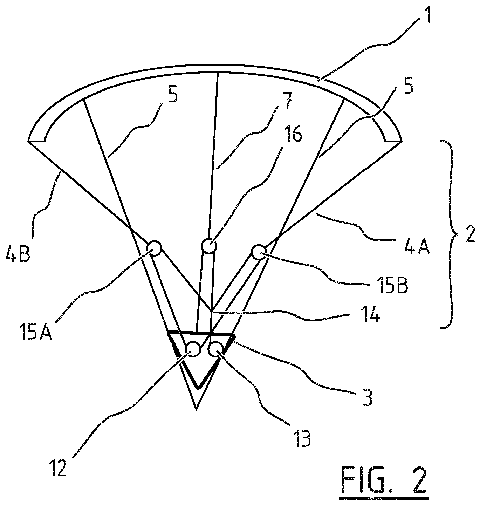

Figure 2 shows a front view of a power kite 1 and bridle system 2 according to a preferred embodiment of the invention. Figure 2 shows the control box 3 with a steering motor 12 and an angle of attack motor 13. Both the steering motor 12 and the angle of attack motor 13 are connected to line control elements. The line control elements preferably comprise a shaft with a coil, connected to each motor 12 and 13, which coil is adapted to act as a mini-winch for the lines. Each coil is preferably provided to wind a first line in a first rotational direction and to wind a second line in a second rotational direction opposite to the first rotational direction. In this manner, a first torque resulting from a first force of the first line is largely cancelled out by a second torque resulting from a second force on the second line. Alternatively, the lines control elements comprise a toothed belt or chain which is compatible with a shaft to be driven by the motor 12, 13, and which toothed belt or chain is connectable to the lines. Further alternatively, the lines control elements comprise a lever which is driven, for example pivoted, by the motor 12, 13, such that the line control is analogue to a kitesurfing bar. Further examples show that torque cannot not always be completely cancelled out, for example when the lines are not connected via a 1 to 1 ratio.

In figure 2, two steering lines 4A and 4B are shown. These steering lines are connected to corresponding pulleys 15A and 15B. These pulleys 15A and 15B are connected to the steering angle motor 12 such that the steering angle motor 12 may indirectly pull and release the steering lines 4A and 4B. The setup illustrated in figure 2 shows that a rotation of the steering angle motor 12 will induce a simultaneous pulling of one steering line and releasing of another steering line. In this manner, the steering lines 4A and 4B can easily be balanced by the steering angle motor 12 to control the steering angle of the power kite 1. The skilled person realizes that more pulleys of less pulleys may be used to influence the ratio and effect of the pulling and releasing of a line by the steering motor to the power kite 1.

In figure 2, two central power lines 5 are shown. These central power lines 5 may transmit power generated by the power kite 1 to the cable 17 directly. Alternatively, these central power lines 5 transmit power generated by the power kite 1 to a frame of the control box 3. In the context of flying a kite, the power generated by the power kite is mechanical power or pulling power and not electrical power. Only by transferring the mechanical power to the ground station, the electric generator at the ground station can convert the mechanical power into electrical power. It will be clear that figure 2 is merely a principle figure and that the central power lines 5 may in a practical situation be branched to connect to multiple locations dispersed over the width of the power kite 1.

Figure 2 shows the back line 7 connected to the angle of attack motor 13. In figure 2, it is chosen to show the back line 7 in a preferred embodiment where the back line 7 is connected to the steering lines 4A and 4B.

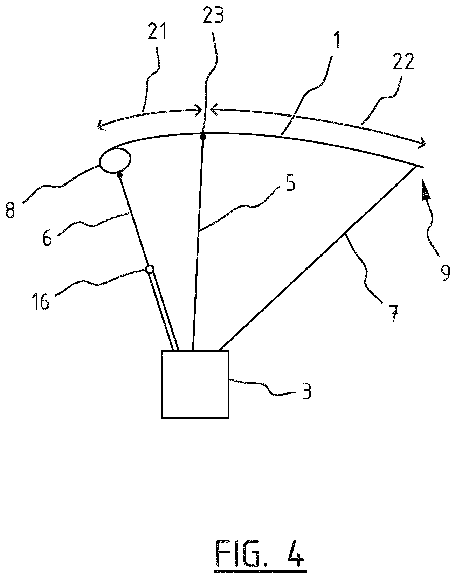

In a further embodiment, a front line 7 is provided and connected to the angle of attack motor 13 along with the back line, which is also connected to the angle of attack motor 13. The front line is winded in an opposite direction to the coil attached to the angle of attack motor 13, compared to the back line 7. In this manner, torques may at least partially cancel each other out. This embodiment is described hereunder with reference to figure 4.

In the embodiment of figure 2, the back line 7 is indirectly, via further pulley 16, connected to the angle of attack motor 13. An intermediate line is connected at one end with the control box 3, runs over the further pulley 16 and towards the angle of attack motor 13. This intermediate line comprises a connection 14 between the further pulley 16 and the angle of attack motor 13 to connect the steering lines 4A and 4B to the back line 7. The steering lines 4A and 4B are indirectly connected, via the pulleys 15A and 15B as well as via further pulley 16, to the back line. When the back line is pulled, the connection 14 induces a pull on the two steering lines 4A and 4B simultaneously. Also, when the back line is released, the connection 14 induces a releasing of the two steering lines 4A and 4B simultaneously. In this way, a change in angle of attack, applied by the angle of attack motor primarily to the back line 7 and optionally also to the front line 6 (not shown in figure 2), also has an effect on the steering lines 4A and 4B such that optimal shape and control of the power kite 1 is maintained. The skilled person realizes that more pulleys of less pulleys may be used to influence the ratio and effect of the pulling and releasing of a line by the angle of attack motor to different parts of the power kite 1. The invention is therefore not limited to the shown embodiment, but the shown embodiment is merely provided as an example to illustrate one way of implementing the general principles of the invention.

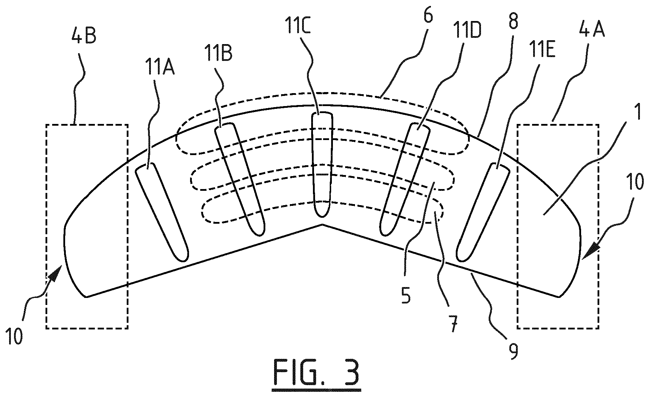

The back line may be embodied by multiple back lines which run to different sections of the trailing edge. Multiple corresponding angle of attack motors may be provided wherein each motor is connected to one of the multiple back lines to enable a sectional angle of attack control. An angle of attack of each section of the kite may be individually controlled. This might be advantageous to further increase the precision of the kite control. Figure 3 shows a top view of a power kite 1. As described above, the power kite 1 is connected to a bridle system 2. To this end, kite connection points are provided at different locations of the power kite 1. These different locations are illustrated in figure 3 as zones drawn onto the surface of the power kite 1.

Figure 3 illustrates the leading edge 8 which shows a curve ensuring that the wingtips 10 lay, from a top-down perspective, behind the central front end of the power kite 1. Figure 3 shows the trailing edge and shows multiple struts 11A - 11E forming reinforcing structures extending from the leading edge 8 in the direction of the trailing edge 9. In some embodiments, kite connection points are exclusively provided at the reinforcing structure, being in the example of figure 3 at the leading edge 8 and the struts 11. In other embodiments, kite connection points are additionally or exclusively provided at the kite skin.

Figure 3 illustrates a central zone, indicated with number 5, where central power lines are connected to the power kite 1. The central zone is located at a distance from the leading edge 8 and at a distance from the trailing edge 9. The central zone is also located at a distance from the wingtips. The central power lines 5 are connected to power kite 1 in the central zone, aiming to absorb the majority of the power generated by the power kite 1. In the context of flying a kite, the power generated by the power kite is mechanical power or pulling power and not electrical power.

In front of the central zone 5, a front zone 6 is illustrated. The front zone 6 includes a central part of the leading edge 8. The front line is connected in the front zone 6. Preferably the front line is branched such that the front line is connected to the power kite 1 at different kite connection points which are dispersed over the front zone 6.

Behind the central zone 5, a back zone 7 is illustrated. The back zone 7 is illustrated not to include the trailing edge 9 of the power kite 1. In an alternative embodiment, the back zone includes the trailing edge 9. The back line is connected in the back zone 7. Preferably the back line is branched such that the back line is connected to the power kite 1 at different kite connection points which are dispersed over the back zone 7.

At the two sides of the power kite 1, two steering zones 4A and 4B are illustrated. These steering zones 4A and 4B include the wingtips 10 of the power kite 1. The steering lines are connected to the power kite 1 at one or more kite connection points located in the steering zones 4A and 4B.

The central zone 5 is located between the front zone 6 and the back zone 7, separating the front zone 6 from the back zone 7. The central zone 5, front zone 6 and back zone 7 are located between the two steering zones 4A and 4B. In the figure, the central, front and back zones 5, 6 and 7 have substantially the same width. This is just an embodiment and the width of the zones may be different. The skilled person will understand that the zones 4, 5 and 6 as shown in the figures are merely imaginary areas limiting or including at least a collection of one or more kite connection points to which the respective lines of the bridle system 2 are connected. Therefore, for example, the back zone 7 may always be drawn to include the trailing edge 9 of the power kite 1. This does not imply that the kite connection points are located at the trailing edge 9. The same reasoning applies for the wingtips and the steering zones 4A and 4B. Furthermore, in line with the explanation above, the central zone 5, front zone 6 and back zone 7 may be sectioned in the span width direction of the kite to enable individual control for multiple sections.

Figure 4 illustrates how the angle of attack may be changed by balancing the front line 6 and the back line 7. The figure shows a simplified section of the kite at the symmetry plane. The figure shows the leading edge 8, which comprises a kite connection point for the front line 6. The figure also shows the trailing edge 9 which comprises a kite connection point for the back line 7. In view of the explanation above, it will be clear that the back line should not be connected at the trailing edge 9, but may preferably be connected at a distance from the trailing edge. The figure 4 also shows the central power line 5, which is connected to a kite connection point 23 located between the front and the back kite connection points to which the front line 6 and back line 7 are connected, respectively.

Based on figure 4, the skilled person will understand that a pulling of the front line 6 and a corresponding releasing of the back line 7, and vise versa, will change the angle of attack. The figure clarifies that the angle of attack will change with respect to the central kite connection point 23, which will act as a fulcrum or rotation point for the angle of attack rotation.

The first distance 21 between the front kite connection point and the central connection point 23 should not be the same as the second distance 22 between the central connection point 23 and the back kite connection point. A ratio between the first distance 21 and the second distance 22 may be compensated by providing one or more pulleys in the bridle system 2. Alternatively, the ratio may be compensated by providing the multiple coils with different diameters. In figure 4, a pulley 16 is provided in the front line 6 such that a pulling of the front line is reduced by a 1 to 2 ratio compared to the corresponding releasing of the back line, and vise versa. This ensures that the angle of attack is adjusted with respect to the central kite connection point 23. I will be clear that this figure is merely provided as an example of how a bridle system can be formed with a back line and a front line to control the angle of attack. A one to one ratio of the first distance 21 and second distance 22 is also an option, which would eliminate the necessity of a pulley to obtain a rotation about the central kite connection point 23.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

## Claims

1. Power kite (1) and a bridle system (2) adapted to connect the power kite to a control box (3) for an airborne wind energy system, the power kite having a leading edge (8) and a trailing edge (9), the bridle system comprising multiple power lines and at least two steering lines (4A, 4B), the steering lines being connected to zones including wingtips (10) of the power kite such that a steering angle of the power kite is controllable by balancing the steering lines, wherein the multiple power lines comprise a back line (7) connected to a back zone of the power kite including a central part of the trailing edge, such that an angle of attack of the power kite is controllable by pulling and releasing the back line and wherein the multiple power lines comprise a front line (6) connected to a front zone of the power kite including a central part of the leading edge, such that an angle of attack of the power kite is controllable by balancing the front and back lines, **characterized in that** the control box comprises an angle of attack shaft comprising a coil for the back line and which is connected to the bridle system in such a manner that rotation of the angle of attack shaft in one direction induces a releasing of the back line, the angle of attack shaft being driven by the angle of attack motor, wherein the coil for the back line is also adapted for coiling the front line in such a manner that rotation of the angle of attack shaft in one direction induces a releasing of the front line and a simultaneous pulling of the back line, such that a balancing of the front and back lines is obtained.

2. Power kite (1) and bridle system (2) according to claim 1 wherein the multiple power lines further comprise at least one central power line connected to a central zone of the kite, the central zone being located at a distance from the leading edge and at a distance from the trailing edge.

3. Power kite (1) and bridle system (2) according to any one of the previous claims, wherein the kite is a single skin kite with a reinforcing structure.

4. Power kite (1) and bridle system (2) according to the previous claim, wherein the reinforcing structure comprises an inflatable leading edge and optionally at least one inflatable strut extending between the leading edge and the trailing edge.

5. Power kite (1) and bridle system (2) according to any one of the previous claims, wherein the bridle system comprises a connection between the steering lines and the back line such that a pulling and releasing of the back line induces a simultaneous pulling and releasing of the steering lines.

6. Power kite (1) and bridle system (2) according to the previous claim, wherein the connection is embodied via a pulley.

7. Power kite (1) and bridle system (2) according to any one of the previous claims, wherein at least one of the multiple power lines comprise multiple branches connected at different locations to the power kite for transversely dividing forces induced by the bridle system to the power kite.

8. Wind energy harvesting system comprising a ground station (18) with a winch system (19) and a wind engaging member for an airborne wind energy system, the wind engaging member comprising a control box (3) connected to a power kite (1) and a bridle system (2) according to any one of the previous claims, wherein the control box comprises at least one steering motor for pulling and releasing the steering lines to control the steering angle of the power kite, and comprises at least one angle of attack motor for pulling and releasing the back line to control the angle of attack of the power kite, **characterized in that** the control box comprises an angle of attack shaft comprising a coil for the back line and which is connected to the bridle system in such a manner that rotation of the angle of attack shaft in one direction induces a releasing of the back line, the angle of attack shaft being driven by the angle of attack motor, wherein the coil for the back line is also adapted for coiling the front line in such a manner that rotation of the angle of attack shaft in one direction induces a releasing of the front line and a simultaneous pulling of the back line, such that a balancing of the front and back lines is obtained.

9. Wind energy harvesting system according to the previous claim, wherein the control box comprises a steering shaft comprising a coil for the steering lines and which is connected to the bridle system in such a manner that rotation of the steering shaft in one direction induces a releasing of one of the steering lines and a simultaneous pulling of the other of the steering lines, such that a balancing of the steering lines is obtained, the steering shaft being driven by the steering motor.

## Patentansprüche

1. Zugdrachen (1) und ein Leinensystem (2), das dazu ausgelegt ist, den Zugdrachen mit einer Steuerbox (3) für ein luftgestütztes Windenergiesystem zu verbinden, wobei der Zugdrachen eine Vorderkante (8) und eine Hinterkante (9) aufweist, wobei das Leinensystem mehrere Kraftleinen und mindestens zwei Steuerleinen (4A, 4B) umfasst, wobei die Steuerleinen mit Zonen verbunden sind, die Flügelspitzen (10) des Zugdrachens einschließen, derart, dass ein Steuerwinkel des Zugdrachens durch Ausbalancieren der Steuerleinen steuerbar ist, wobei die mehreren Kraftleinen eine Rückleine (7) umfassen, die mit einer Rückzone des Zugdrachens verbunden ist, die einen zentralen Teil der Hinterkante einschließt, derart, dass ein Anstellwinkel des Zugdrachens durch Ziehen und Freigeben der Rückleine steuerbar ist, und wobei die mehreren Kraftleinen eine Frontleine (6) umfassen, die mit einer Frontzone des Zugdrachens verbunden ist, die einen zentralen Teil der Vorderkante einschließt, derart, dass ein Anstellwinkel des Zugdrachens durch Ausbalancieren der Front- und Rückleinen steuerbar ist, **dadurch gekennzeichnet, dass** die Steuerbox eine Anstellwinkelwelle umfasst, die eine Spule für die Rückleine umfasst und die mit dem Leinensystem in einer solchen Weise verbunden ist, dass eine Drehung der Anstellwinkelwelle in eine Richtung eine Freigabe der Rückleine bewirkt, wobei die Anstellwinkelwelle von dem Anstellwinkelmotor angetrieben wird, wobei die Spule für die Rückleine auch dazu ausgelegt ist, die Frontleine in einer solchen Weise aufzuspulen, dass eine Drehung der Anstellwinkelwelle in eine Richtung eine Freigabe der Frontleine und ein gleichzeitiges Ziehen der Rückleine bewirkt, derart, dass ein Ausbalancieren der Front- und Rückleinen erhalten wird.

2. Zugdrachen (1) und Leinensystem (2) nach Anspruch 1, wobei die mehreren Kraftleinen ferner mindestens eine zentrale Kraftleine umfassen, die mit einer zentralen Zone des Drachens verbunden ist, wobei sich die zentrale Zone in einem Abstand von der Vorderkante und in einem Abstand von der Hinterkante befindet.

3. Zugdrachen (1) und Leinensystem (2) nach einem der vorstehenden Ansprüche, wobei der Drachen ein einhäutiger Drachen mit einer Verstärkungsstruktur ist.

4. Zugdrachen (1) und Leinensystem (2) nach dem vorstehenden Anspruch, wobei die Verstärkungsstruktur eine aufblasbare Vorderkante und optional mindestens eine aufblasbare Strebe umfasst, die sich zwischen der Vorderkante und der Hinterkante erstreckt.

5. Zugdrachen (1) und Leinensystem (2) nach einem der vorstehenden Ansprüche, wobei das Leinensystem eine Verbindung zwischen den Steuerleinen und der Rückleine umfasst, so dass ein Ziehen und Loslassen der Rückleine ein gleichzeitiges Ziehen und Loslassen der Steuerleinen bewirkt.

6. Zugdrachen (1) und Leinensystem (2) nach dem vorstehenden Anspruch, wobei die Verbindung über eine Umlenkrolle ausgebildet ist.

7. Zugdrachen (1) und Leinensystem (2) nach einem der vorstehenden Ansprüche, wobei mindestens eine der mehreren Kraftleinen mehrere Verzweigungen umfasst, die an verschiedenen Stellen mit dem Zugdrachen verbunden sind, um durch das Leinensystem auf den Zugdrachen induzierte Kräfte quer zu unterteilen.

8. Windenergiegewinnungssystem, umfassend eine Bodenstation (18) mit einem Windensystem (19) und ein windeingreifendes Element für ein luftgestütztes Windenergiesystem, wobei das windeingreifende Element eine Steuerbox (3) umfasst, die mit einem Zugdrachen (1) und einem Leinensystem (2) nach einem der vorstehenden Ansprüche verbunden ist, wobei die Steuerbox mindestens einen Lenkmotor zum Ziehen und Freigeben der Lenkleinen zur Steuerung des Lenkwinkels des Zugdrachens umfasst und mindestens einen Anstellwinkelmotor zum Ziehen und Freigeben der Rückleine zur Steuerung des Anstellwinkels des Zugdrachens umfasst, **dadurch gekennzeichnet, dass** die Steuerbox eine Anstellwinkelwelle umfasst, die eine Spule für die Rückleine umfasst und die mit dem Leinensystem derart verbunden ist, dass eine Drehung der Anstellwinkelwelle in eine Richtung eine Freigabe der Rückleine bewirkt, wobei die Anstellwinkelwelle durch den Anstellwinkelmotor angetrieben wird, wobei die Spule für die Rückleine auch zum Aufspulen der Frontleine ausgelegt ist, derart, dass eine Drehung der Anstellwinkelwelle in eine Richtung eine Freigabe der Frontleine und ein gleichzeitiges Ziehen der Rückleine bewirkt, so dass ein Ausgleich der Front- und Rückleinen erhalten wird.

9. Windenergiegewinnungssystem nach dem vorstehenden Anspruch, wobei die Steuerbox eine Steuerwelle umfasst, die eine Spule für die Steuerleinen umfasst und die mit dem Leinensystem derart verbunden ist, dass eine Drehung der Steuerwelle in eine Richtung ein Freigeben einer der Steuerleinen und ein gleichzeitiges Ziehen der anderen der Steuerleinen bewirkt, so dass ein Ausgleich der Steuerleinen erhalten wird, wobei die Steuerwelle von dem Steuermotor angetrieben wird.

## Revendications

1. Cerf-volant de puissance (1) et système de câble (2) conçu pour relier le cerf-volant de puissance à un boîtier de commande (3) pour un système d'énergie éolienne aérienne, le cerf-volant de puissance ayant un bord d'attaque (8) et un bord de fuite (9), le système de câble comprenant de multiples lignes de traction et au moins deux lignes de direction (4A, 4B), les lignes de direction étant reliées à des zones comportant des bouts d'aile (10) du cerf-volant de puissance de sorte qu'un angle de direction du cerf-volant de puissance puisse être commandé en équilibrant les lignes de direction, dans lesquels les multiples lignes de traction comprennent une ligne arrière (7) reliée à une zone arrière du cerf-volant de puissance comportant une partie centrale du bord de fuite, de sorte qu'un angle d'attaque du cerf-volant de puissance puisse être commandé en tirant et en relâchant la ligne arrière, et dans lesquels les multiples lignes de traction comprennent une ligne avant (6) reliée à une zone avant du cerf-volant de puissance comportant une partie centrale du bord d'attaque, de sorte qu'un angle d'attaque du cerf-volant de puissance puisse être commandé en équilibrant les lignes avant et arrière, **caractérisé en ce que** le boîtier de commande comprend un arbre d'angle d'attaque comprenant une bobine pour la ligne arrière et qui est relié au système de câble de telle sorte que la rotation de l'arbre d'angle d'attaque dans une direction induise un relâchement de la ligne arrière, l'arbre d'angle d'attaque étant entraîné par le moteur d'angle d'attaque, dans lesquels la bobine pour la ligne arrière est également conçue pour enrouler la ligne avant de telle sorte que la rotation de l'arbre d'angle d'attaque dans une direction induise un relâchement de la ligne avant et une traction simultanée de la ligne arrière, de sorte qu'un équilibrage des lignes avant et arrière soit obtenu.

2. Cerf-volant de puissance (1) et système de câble (2) selon la revendication 1, dans lesquels les multiples lignes de traction comprennent en outre au moins une ligne de traction centrale reliée à une zone centrale du cerf-volant, la zone centrale étant située à une certaine distance du bord d'attaque et à une certaine distance du bord de fuite.

3. Cerf-volant de puissance (1) et système de câble (2) selon l'une quelconque des revendications précédentes, dans lesquels le cerf-volant est un cerf-volant à simple peau avec une structure de renforcement.

4. Cerf-volant de puissance (1) et système de câble (2) selon la revendication précédente, dans lesquels la structure de renforcement comprend un bord d'attaque gonflable et optionnellement au moins un support gonflable s'étendant entre le bord d'attaque et le bord de fuite.

5. Cerf-volant de puissance (1) et système de câble (2) selon l'une quelconque des revendications précédentes, dans lesquels le système de câble comprend une liaison entre les lignes de direction et la ligne arrière de sorte qu'une traction et un relâchement de la ligne arrière induisent une traction et un relâchement simultanés des lignes de direction.

6. Cerf-volant de puissance (1) et système de câble (2) selon la revendication précédente, dans lesquels la liaison est réalisée par l'intermédiaire d'une poulie.

7. Cerf-volant de puissance (1) et système de câble (2) selon l'une quelconque des revendications précédentes, dans lesquels au moins l'une des multiples lignes de traction comprend de multiples branches reliées au niveau de différents emplacements au cerf-volant de puissance pour diviser transversalement des forces induites par le système de câble sur le cerf-volant de puissance.

8. Système de récupération d'énergie éolienne comprenant une station terrestre (18) avec un système de treuil (19) et un élément de prise au vent pour un système d'énergie éolienne aérienne, l'élément de prise au vent comprenant un boîtier de commande (3) relié à un cerf-volant de puissance (1) et à un système de câble (2) selon l'une quelconque des revendications précédentes, dans lequel le boîtier de commande comprend au moins un moteur de direction destiné à tirer et à relâcher les lignes de direction afin de commander l'angle de direction du cerf-volant de puissance, et comprend au moins un moteur d'angle d'attaque destiné à tirer et à relâcher la ligne arrière afin de commander l'angle d'attaque du cerf-volant de puissance, **caractérisé en ce que** le boîtier de commande comprend un arbre d'angle d'attaque comprenant une bobine pour la ligne arrière et qui est relié au système de câble de telle sorte que la rotation de l'arbre d'angle d'attaque dans une direction induise un relâchement de la ligne arrière, l'arbre d'angle d'attaque étant entraîné par le moteur d'angle d'attaque, dans lequel la bobine pour la ligne arrière est également conçue pour enrouler la ligne avant de telle sorte que la rotation de l'arbre d'angle d'attaque dans une direction induise un relâchement de la ligne avant et une traction simultanée de la ligne arrière, de sorte qu'un équilibrage des lignes avant et arrière soit obtenu.

9. Système de récupération d'énergie éolienne selon la revendication précédente, dans lequel le boîtier de commande comprend un arbre de direction comprenant une bobine pour les lignes de direction et qui est reliée au système de câble de telle sorte que la rotation de l'arbre de direction dans une direction induise un relâchement de l'une des lignes de direction et une traction simultanée de l'autre des lignes de direction, de sorte qu'un équilibrage des lignes de direction soit obtenu, l'arbre de direction étant entraîné par le moteur de direction.
